# EUROPÄISCHE PATENTANMELDUNG

(11) **EP 0 767 047 A2**
(43) Veröffentlichungstag der Anmeldung: **09.04.1997**
(21) Anmeldenummer: 96114421.9
(22) Anmeldetag: 10.09.1996
(51) Int. Cl.: B29C 51/26

(54) **Verkleinerungsrahmen für Thermoformmaschine**

(30) Priorität: 03.10.1995 DE 19536867
(71) Anmelder: Adolf Illig Maschinenbau GmbH & Co, D-74081 Heilbronn (DE)
(72) Erfinder: Greuling, Franz, 74226 Nordheim (DE)

(57) **Zusammenfassung**

Durch die Erfindung wird ein Verkleinerungsrahmen einer Thermoformmaschine so gestaltet, daß er einfach und billig in der Herstellung ist und nicht geschweißt werden muß. Er ist maßhaltig und aus Einzelteilen leicht herstellbar und versandfähig und kann beim Benutzer einfach montiert werden für zweierlei Einbaufälle. Er läßt das Vorblasen und eine Luftstützung der erwärmten Platte zu. Er eignet sich für eine automatische Umrüstung beim Formenwechsel.

Die Erfindung ist durch Figur 3 charakteristisch dargestellt.

## Beschreibung

Die Erfindung betrifft einen Verkleinerungsrahmen für eine Thermoformmaschine zum Verformen von erwärmten Platten oder Folienbahnabschnitten aus thermoplastischem Kunststoff nach der Gattung des Hauptanspruches.

Thermoformmaschinen dieser Gattung werden in bekannter Weise als Universalformmaschine gebaut, das heißt, sie sind für einen maximalen Plattenzuschnitt mit einem festen Maschinenrahmen ausgelegt. Da die zu formenden Teile in der Regel von diesen maximal möglichen Maßen abweichen werden, um Kunststoffmaterial zu sparen, Verkleinerungsrahmen eingesetzt, die optimal den herzustellenden Teilen angepaßt sind. Diese werden in bekannter Weise aus einem Rahmen mit dem Maß der einzuspannenden Platte gebildet, der z. B. aus U-Profilen aus Stahl zusammengeschweißt ist. Zur Überbrückung der Lücke zum festen Maschinenrahmen werden Bleche angeschweißt. Nach dem Einsetzen eines solchen Rahmens in den Maschinenrahmen wird auf diese Weise mit der eingespannten Platte ein dichter Blaskasten gebildet. Dieser erlaubt eine Luftstützung der erwärmten Platte und ein pneumatisches Vorblasen dieser Platte vor der Verformung. Dies sind Verfahrensschritte, die von einer Thermoformmaschine erwartet werden.

Die auf diese Weise gefertigten Verkleinerungsrahmen haben einige Nachteile. Sie sind relativ teuer in der Herstellung und müssen geschweißt werden. Sie sind deshalb nur aus warmgewalzten Profilen herstellbar, die grobe Toleranzen aufweisen, da sich kaltgezogene Profile schlecht schweißen lassen. Diese groben Toleranzen führen zu Qualitätsproblemen. Der Rahmen ist teuer im Versand, da er nur als fertiges Teil im Ganzen vom Hersteller an den Verwender versandt werden kann. Die Herstellung der Verkleinerungsrahmen erfordert Schweißkenntnisse, die die Auswahl gerade billiger Lohnfertiger für solche Verkleinerungsrahmen einschränken. Das Schweißen führt zu Verzug, was einen Glühvorgang erforderlich machen kann.

Es wurde bereits vorgeschlagen, den Verkleinerungsrahmen so auszubilden, daß nicht für jedes Format ein eigener Rahmen erforderlich ist, sondern daß dieser verstellbar und damit anpaßbar an verschiedene Formate gestaltet wird. Solche Konstruktionen sind aber in der Herstellung recht teuer, vor allem wenn die Verstellung nicht von Hand, sondern motorisch in zwei Achsen erfolgen soll. Außerdem sind solche Verkleinerungsrahmen nicht so ausgebildet, daß ein dichter Blaskasten entsteht, so daß Vorblasen und Luftstützung nicht möglich sind.

Die Maschinensteuerungen und die Gestaltung heutiger Thermoformmaschinen ermöglichen eine Maschinenumrüstung in wenigen Minuten auf ein neues Produkt, auch mit anderem Plattenformat. Dazu werden die Spannrahmen automatisch entriegelt und mit dem Formwerkzeug zusammen auf dem Formtisch abgelegt einschließlich Vorstreckstempel. Umgekehrt wird das neue Formwerkzeug nach dem Niederlegen auf den Formtisch eingerüstet.

Der Erfindung liegt die Aufgabe zugrunde, einen Verkleinerungsrahmen so auszubilden, daß er einfach und billig mit hoher Genauigkeit ohne Schweißarbeiten hergestellt werden kann. Er sollte nach dem Einspannen einer Platte mit der Thermoformmaschine einen dichten Blaskasten bilden können. Er sollte außerdem das automatische Ausrüsten ermöglichen bei entsprechend ausgebildeter Thermoformmaschine. Formatmäßig sollte er in vorhandenen Thermoformmaschinen mit geschweißten Verkleinerungsrahmen ohne Änderungen eingebaut werden können. Es sollte möglich sein, den Verkleinerungsrahmen als zugeschnittene Teile zu versenden, also als relativ kleines Paket, und er sollte vor Ort auf einfache Weise montierbar sein. Der Einbau des Verkleinerungsrahmens sollte von oben oder unten in den festen Maschinenrahmen möglich sein, je nach dessen Ausbildung für manuelle oder automatische Werkzeugumrüstung.
Zur Lösung der Aufgabe werden die kennzeichnenden Merkmale des Hauptanspruches vorgeschlagen. Vorteilhafte Weiterbildungen sind in den Unteransprüchen dargelegt. Die Erfindung ist anhand der schematischen Zeichnungen näher beschrieben. Es zeigt:

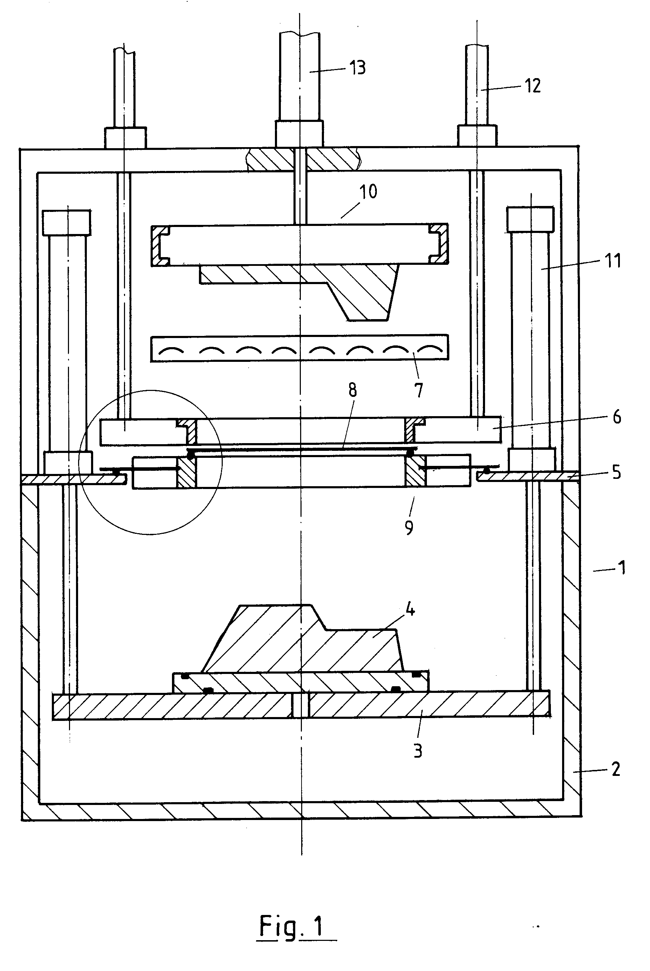

- Figur 1 -: einen Querschnitt durch die Formstation einer Thermoformmaschine mit von oben eingebautem Verkleinerungsrahmen
- Figur 2 -: einen vergrößerten Ausschnitt der Figur 1
- Figur 3 -: denselben Querschnitt gemäß Figur 2 bei einem von unten eingebauten Verkleinerungsrahmen
- Figur 4 -: eine Draufsicht auf den Verkleinerungsrahmen
- Figur 5 -: einen Schnitt A - A in der Draufsicht Figur 4
- Figur 6 -: eine Teildraufsicht auf den Verkleinerungsrahmen gemäß Ausschnitt "X" in Figur 4
- Figur 7 -: eine vorteilhafte Gestaltung der Längsholme des Verkleinerungsrahmens - Einbau von oben
- Figur 8 -: eine vorteilhafte Gestaltung des Verkleinerungsrahmens - Einbau von unten
- Figur 9 -: die Draufsicht auf die Darstellung gemäß Figuren 7/8
- Figur 10 -: einen Querschnitt durch einen Längs- bzw. Querholm gemäß einer vorteilhaften Weiterbildung

Die Formstation 1 der Thermoformmaschine besteht aus einem Blaskasten 2, einem in ihm höhenverschiebbar angeordneten Formtisch 3 zum Aufnehmen einer Tiefziehform 4, dem festen Maschinenrahmen 5 und dem oberen Spannrahmen 6. Eine Heizung 7 dient der Erwärmung einer Platte 8 aus thermoplastischem Kunststoff, die zwischen dem oberen Spannrahmen 6 und dem Verkleinerungsrahmen 9 eingespannt ist. Ein Streckhelfer 10 kann vorgesehen sein. Antriebe 11, 12, 13 dienen zur Bewegung von Formtisch 3, Spannrahmen 6 bzw. Streckhelfer 10.

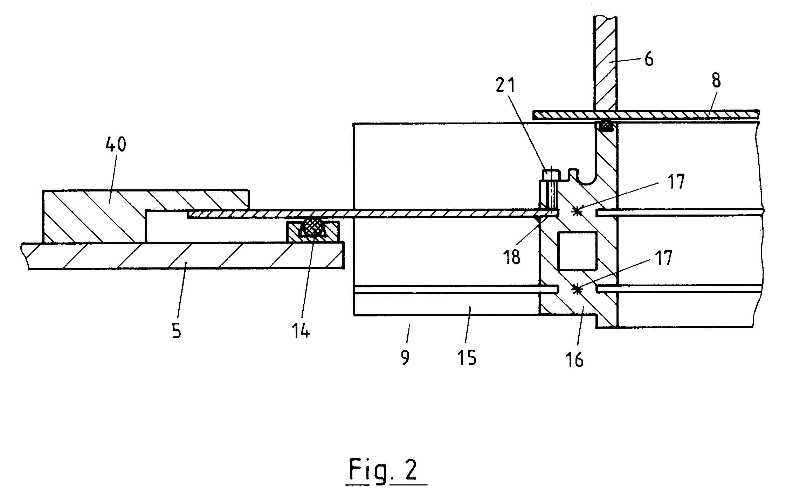

Figur 2 zeigt den Aufbau des Verkleinerungsrahmens 9 beim Einbau von oben in den festen Maschinenrahmen 5. Diesen Einbau wählt man dann, wenn ein manueller Wechsel des Verkleinerungsrahmens 9 beim Umrüsten erfolgt. Der feste Maschinenrahmen 5 weist dabei an der Oberseite eine umlaufende Dichtung 14 auf, auf der der Verkleinerungsrahmen 9 aufliegt und mittels Spannpratzen 40 festgehalten wird. Der Verkleinerungsrahmen 9 besteht aus 2 Längsholmen 15 und 2 Querholmen 16, die über Schrauben 17 verschraubt sind. Die Längsholme 15 sind dabei vorzugsweise aus Gründen der Stabilität maßlich dem lichten Maß des festen Maschinenrahmens 5 angepaßt und wenig kleiner als dieser. Die Querprofile 16 sind entsprechend dem erforderlichen Maß des Verkleinerungsrahmens 9 angepaßt. Die Profile zur Herstellung von Längs- bzw. Querholmen 15, 16 weisen auf der Außenseite mindestens einen Schlitz 18 zur Aufnahme je eines Distanzbleches auf, die zusammen den Abstand bis zum Maschinenrahmen 5 überbrücken.

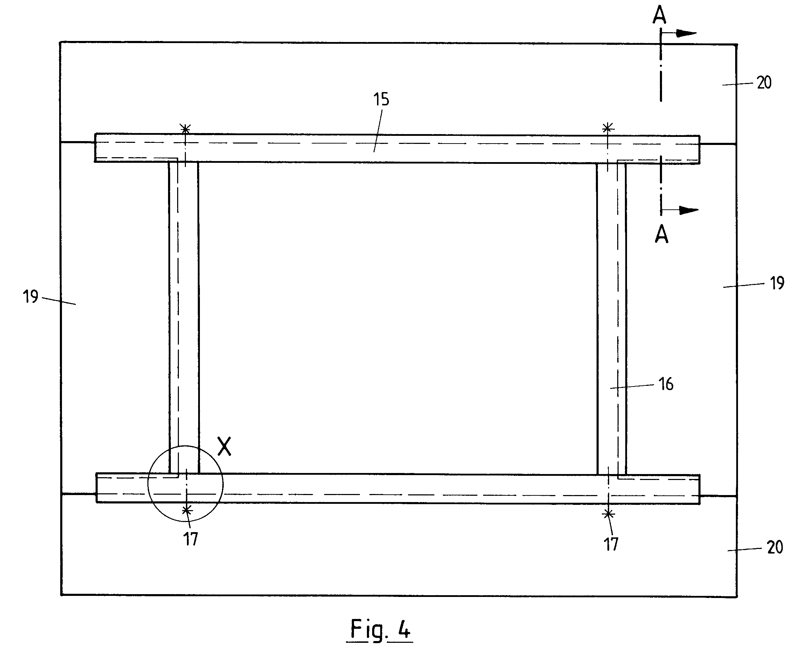

Figur 4 zeigt die Anordnung der 4 Distanzbleche 19, 20, die im Schlitz 18 jedes Längs- bzw. Querholmes 15, 16 verlaufen und in diesem durch mindestens eine Schraube 21 gehalten sind. Die gestrichelten Linien in Figur 4 zeigen den Verlauf der Innenkante der Distanzbleche 19, 20. Die beiden Distanzbleche 20, die in den Längsholmen 15 gehalten sind, haben rechteckige Gestalt. Die beiden mit den Querholmen 16 verbundenen Distanzbleche 19 sind an der den Längsholmen 15 zugewandten Seite ausgeklinkt. Dabei hat es sich als vorteilhaft erwiesen, zumindest in den Profilen für die Längsholme 15 an der Innenseite gegenüber dem Schlitz 18 einen Schlitz 22 auf gleicher Höhe vorzusehen, so daß sich die Distanzbleche 19 sowohl im Schlitz 18 des entsprechenden Querholmes 16 als auch in beiden Längsholmen 15 im jeweiligen Schlitz 22 abstützen. Dies hat zum einen Stabilitätsgründe und erleichtert das Abdichten der Distanzbleche 19 zu den Querholmen 16, was z. B. auf einfache Weise durch eine Silikonkehlnaht 23 am Übergang Distanzblech/Holm möglich ist.

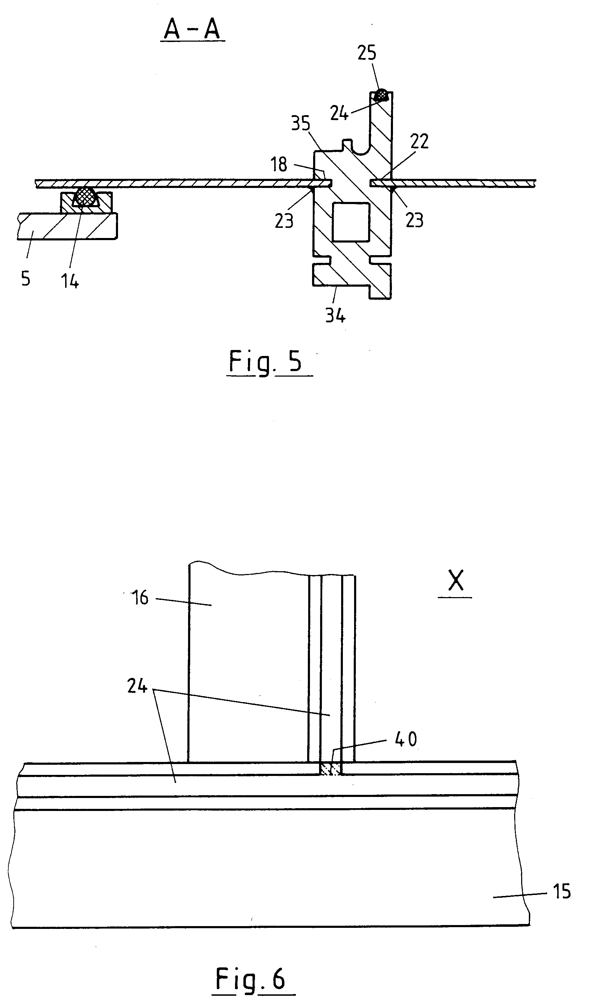

An der Oberseite weisen die Profile für die Längs-/Querholme eine schwalbenschwanzartige Nut 24 zur Aufnahme eines Dichtgummis 25 auf. An der Verbindungsstelle (Figur 6 vergrößert) wird vorzugsweise ein Wandbereich 40 der Nut 24 ausgespart, so daß der Dichtgummi 25 ringsum ohne Unterbrechung eingelegt werden kann.

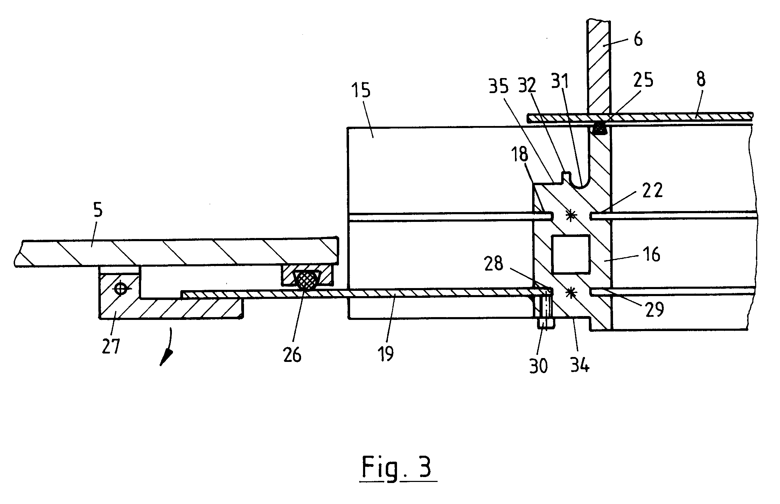

Wird der Verkleinerungsrahmen 9 von unten an den festen Maschinenrahmen 5 angelegt, wie es bei einem automatischen Werkzeugwechsel erfolgt, wird eine Ausführung des Verkleinerungsrahmens 9 gemäß Figur 3 gewählt. Der feste Maschinenrahmen 5 weist jetzt eine Dichtung 26 an der Unterseite auf, gegen die die Distanzbleche 19, 20 über Klappleisten 27 gedrückt werden. Bei einem Formenwechsel schwenken diese nach unten, der Verkleinerungsrahmen 9 wird auf der Form 4 abgelegt. Um gleiche Einbauverhältnisse in der Höhenlage des Verkleinerungsrahmens 9 zu haben wie beim Einbau von oben, haben die Profile für die Längs- bzw. Querholme 15/16 zwei weitere Schlitze 28, 29 auf entsprechendem Abstand. In ihnen werden in gleicher Weise die Distanzbleche 19, 20 aufgenommen und über Schrauben 30 gehalten. Mit gleichen Teilen kann auf diese Weise ein Verkleinerungsrahmen 9 für Einbau von oben oder unten hergestellt werden.

Ein Versand des Verkleinerungsrahmens 9 kann in zerlegtem Zustand als relativ kleines Paket erfolgen. Beim Anwender wird der Rahmen zusammengeschraubt und die Fugen werden mit Silikon abgedichtet. Dies ist mit einfachem handwerklichen Können durchführbar.

Die Profile zur Bildung der Längs- und Querholme 15, 16 bestehen aus Metall, vorzugsweise aus einer Aluminiumlegierung. Aluminium hat den Vorteil, daß sich auch kompliziertere Profile fertig ziehen lassen inklusive Schlitzen und auch Hohlräumen zur Gewichtsreduzierung. Außerdem ist Aluminium ein guter Reflektor, so daß die Innenflächen der Verkleinerungsrahmen Wärmestrahlung gut reflektieren. Eine Ausspiegelung mit Aluminium kann deshalb entfallen, wie es bei Rahmen aus geschweißten Stahlprofilen erforderlich sein kann.

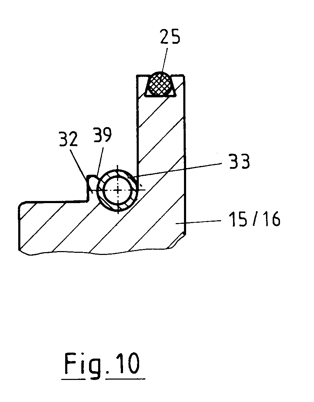

Außer den bereits erwähnten Schlitzen 18, 22, 28, 29 kann das Profil eine halbrunde Profilierung 31 zum Einlegen eines Rohres aufweisen, durch das ein Temperiermedium geleitet werden kann (siehe Figur 10). Durch einen überstehenden schmalen Bund 32, den man örtlich nach innen drücken kann, wird ein Rohr 33 auf einfache Weise gehalten. Oder der Bund 32 weist eine nach innen springende Nase 39 zur Bildung eines Hinterschnittes auf. Das Rohr 33 wird einfach eingedrückt.

Absätze 34, 35 dienen der Gewichtsreduzierung und vermeiden ein Überstehen des Schraubenkopfes der Schrauben 21, 30. Im Innern kann das Profil hohl sein zur Gewichtsreduzierung.

Die Befestigung der Distanzbleche 19, 20 erfolgt im dargestellten Beispiel durch Schrauben. Andere Befestigungen, wie Kleben, Nieten, Verstiften sind möglich.

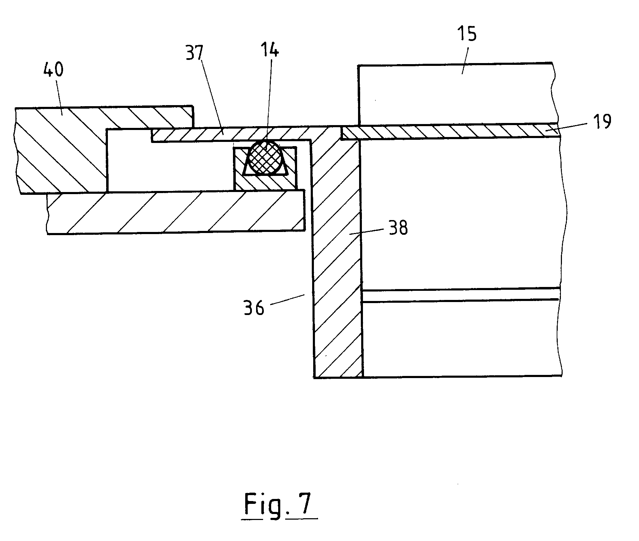

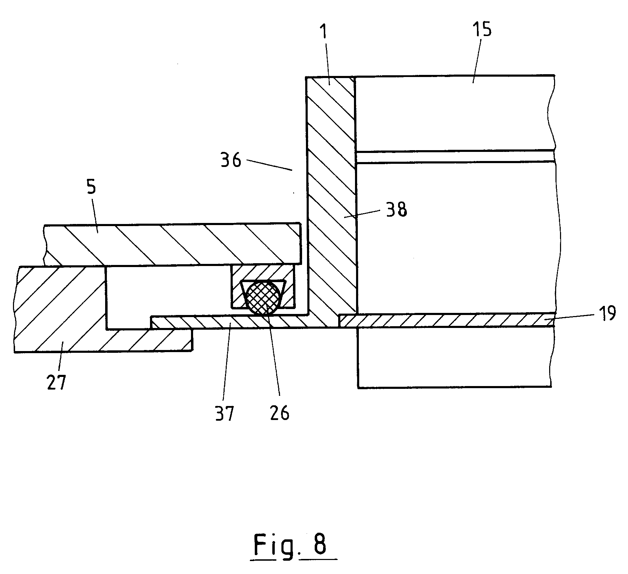

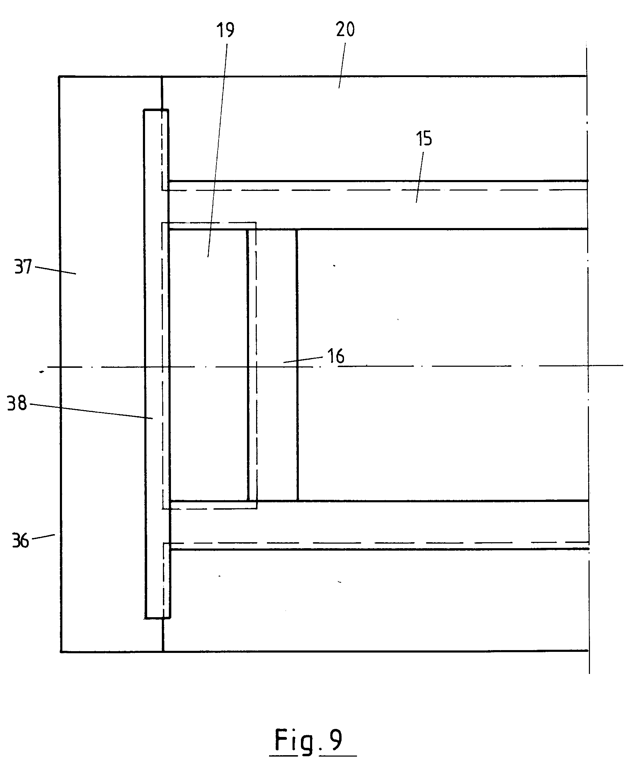

Die Figuren 7 bis 9 zeigen eine vorteilhafte Ausführung der Enden der beiden Längsholme 15 bei Einbau des Verkleinerungsrahmens von oben bzw. unten in den festen Maschinenrahmen 5. Figur 9 zeigt die Draufsicht bei Einbau von unten. Um die auf den Verkleinerungsrahmen 9 einwirkenden Kräfte des oberen Spannrahmens 6 besonders gut auffangen zu können, sind jeweils die beiden Enden der Längsholme 15 durch einen quer verlaufenden Winkel 36 verbunden. Der eine Schenkel 37 stützt sich - je nach Einbau - auf der Dichtung 14 bzw. 26 des festen Maschinenrahmens 5 ab. Die Distanzbleche 19, 20 sind entsprechend angepaßt und haben nur noch rechteckige Kontur, wenn der an den Längsholmen 15 befestigte Schenkel 38 des Winkels 36 an den Enden etwas abgefräst wird. Der Konturverlauf kann aus Figur 9 ersehen werden. Es ist möglich, die Länge des Winkels 36 immer gleich zu wählen und zwar wenig kleiner als das lichte Maß des festen Maschinenrahmens 5. Auf diese Weise kann dieser Winkel 36 in größeren Stückzahlen produziert werden. Dies verbilligt seine Herstellung.

## Patentansprüche

1. Verkleinerungsrahmen zum Einbau in den festen Maschinenrahmen einer Thermoformmaschine, bestehend aus einem Rahmen aus Längs- und Querholmen aus Profilen in der Größe der einzuspannenden Platte und Distanzblechen zur Überbrückung der Distanz bis zum festen Maschinenrahmen, gekennzeichnet durch folgende Merkmale:
a) Die Profile zur Bildung der Längsholme (15) und Querholme (16) weisen auf der Außenseite einen Schlitz (18) zur Aufnahme von Distanzblechen (19, 20) auf.
b) Die Distanzbleche (19, 20) sind in den Schlitzen (18) befestigt und stoßen so aneinander, daß sie insgesamt eine lückenlose rechteckige Fläche bilden.

2. Verkleinerungsrahmen nach Anspruch 1 dadurch gekennzeichnet, daß die Längsholme (15) über die Querholme (16) vorstehen.

3. Verkleinerungsrahmen nach Anspruch 3 dadurch gekennzeichnet, daß die Längsholme (15) bis in die Nähe der Außenkante der Distanzbleche (19) verlaufen.

4. Verkleinerungsrahmen nach einem der Ansprüche 2 oder 3 dadurch gekennzeichnet, daß die Profile zur Bildung der Längsholme (15) und Querholme (16) auch an der Außenseite eine Nut (22) auf gleicher Höhe wie die Nut (18) an der Innenseite aufweisen, in der sich die quer verlaufenden Distanzbleche (19) abstützen.

5. Verkleinerungsrahmen nach einem der Ansprüche 1 bis 4 dadurch gekennzeichnet, daß die Profile zur Bildung der Längsholme (15) und Querholme (16) zwei weitere Schlitze (28, 29) auf gleicher Höhe und im Abstand zu den Schlitzen (18, 22) aufweisen.

6. Verkleinerungsrahmen nach Anspruch 5 dadurch gekennzeichnet, daß der höhenmäßige Abstand der Schlitze (18, 22 bzw. 28, 29) dem Abstand der Dichtungen (14, 26) des festen Maschinenrahmens (5) für den Einbau des Verkleinerungsrahmens von oben bzw. Einbau von unten angepaßt ist.

7. Verkleinerungsrahmen nach einem der Ansprüche 1 bis 6 dadurch gekennzeichnet, daß die Distanzbleche (19, 20) mit den Holmen (15, 16) verschraubt, verstiftet oder vernietet sind.

8. Verkleinerungsrahmen nach einem der Ansprüche 1 bis 6 dadurch gekennzeichnet, daß die Distanzbleche (19, 20) mit den Holmen (15, 16) verklebt sind.

9. Verkleinerungsrahmen nach einem der Ansprüche 1 bis 8 dadurch gekennzeichnet, daß die Verbindungsstellen der Holme (15, 16) und der Distanzbleche (19, 20) abgedichtet sind.

10. Verkleinerungsrahmen nach einem der Ansprüche 1 bis 9 dadurch gekennzeichnet, daß die Profile zur Bildung der Holme (15, 16) ein halbrundförmiges Profil (31) zum Einlegen eines Rohres (33) zur Durchführung eines Temperiermediums aufweisen.

11. Verkleinerungsrahmen nach Anspruch 10 dadurch gekennzeichnet, daß sich an das halbrundförmige Profil (31) ein schmaler Absatz (32) anschließt, der örtlich nach innen gebogen ist.

12. Verkleinerungsrahmen nach Anspruch 10 dadurch gekennzeichnet, daß der Absatz (32) eine Nase (39) zur Bildung eines Hinterschnittes aufweist.

13. Verkleinerungsrahmen nach einem der Ansprüche 3 bis 12 dadurch gekennzeichnet, daß die Enden der Längsholme (15) mit einem Winkel (36) verbunden sind, dessen einer Schenkel (37) mit der Unterkante bzw. Oberkante auf Höhe der Distanzbleche (19, 20) verläuft.

14. Verkleinerungsrahmen nach Anspruch 13 dadurch gekennzeichnet, daß der Winkel (36) bis in die Nähe der Außenkante der Distanzbleche (20) verläuft.

15. Verkleinerungsrahmen nach einem der Ansprüche 1 bis 14 dadurch gekennzeichnet, daß die Profile zur Bildung der Holme (15, 16) innen hohl sind.

16. Verkleinerungsrahmen nach einem der Ansprüche 1 bis 15 dadurch gekennzeichnet, daß die Profile zur Bildung der Holme (15, 16) eine schwalbenschwanzförmige Nut (24) zur Aufnahme eines Dichtgummis (25) aufweisen.

17. Verkleinerungsrahmen nach Anspruch 16 dadurch gekennzeichnet, daß der Wandbereich der Nut (24) an der Verbindungsstelle von Längsholm (15) und Querholme (16) ausgespart ist.
